# EUROPEAN PATENT APPLICATION

(11) **EP 4 240 051 A1**
(43) Date of publication of application: **06.09.2023**
(21) Application number: 21885129.3
(22) Date of filing: 26.10.2021
(51) Int. Cl.: H04W 24/08

(54) **MEASUREMENT ADJUSTMENT METHOD, AND TERMINAL**

(30) Priority: 30.10.2020 CN 202011193863
(71) Applicant: Vivo Mobile Communication Co., Ltd., Dongguan, Guangdong 523863 (CN)
(72) Inventor: CHEN, Li, Dongguan, Guangdong 523863 (CN); PAN, Xueming, Dongguan, Guangdong 523863 (CN); JIANG, Dajie, Dongguan, Guangdong 523863 (CN); SHEN, Xiaodong, Dongguan, Guangdong 523863 (CN)
(74) Representative: Conti, Marco
(86) International application number: PCT/CN2021/126322
(87) International publication number: WO 2022/089402

(57) **Abstract**

Embodiments of this application disclose a measurement adjustment method and a terminal, so as to resolve the problem that in the related art, radio link monitoring RLM measurement adjustment and beam failure detection BFD measurement adjustment (for example, measurement relaxation and measurement enhancement) by terminals are not supported, which does not help implement power saving for the terminals nor helps further improve reliability of radio links and beams. The method includes: determining, by a terminal according to a preset rule, whether to perform RLM measurement adjustment and/or BFD measurement adjustment, where the measurement adjustment includes at least one of the following: measurement relaxation, measurement enhancement, or normal measurement.

## Description

### CROSS-REFERENCE TO RELATED APPLICATIONS

This application claims priority to Chinese Patent Application No. 202011193863.7, filed in China on October 30, 2020 and entitled "MEASUREMENT ADJUSTMENT METHOD AND TERMINAL", which is incorporated herein by reference in its entirety.

### TECHNICAL FIELD

This application pertains to the field of communication technologies, and specifically, relates to a measurement adjustment method and a terminal.

### BACKGROUND

For power saving, a terminal skips monitoring physical downlink control channels (Physical Downlink Control Channel, PDCCH) in one or more subsequent discontinuous reception (Discontinuous Reception, DRX) periods by using a downlink control information (Downlink Control Information, DCI) indication or using an advance indication signal (for example, a go-to-sleep signal) introduced. That is, the terminal does not need to wake up in a DRX on duration (DRX on Duration) to monitor PDCCHs.

To guarantee reliability of a radio link and/or beam, the terminal needs to perform radio link monitoring (Radio Link Monitoring, RLM) and/or beam failure detection (Beam Failure Detection, BFD) periodically according to specific requirements. For example, the terminal wakes up to perform RLM and/or BFD in each DRX period or several DRX periods. Thus, even if the DCI or advance indication signal indicates that the terminal does not need to perform PDCCH monitoring, the terminal still needs to wake up to perform RLM and/or BFD. Consequently, the purpose of power saving cannot be achieved.

However, in the related art, RLM measurement adjustment and BFD measurement adjustment (for example, measurement relaxation and measurement enhancement) by terminals are not supported, which does not help implement power saving for the terminals nor helps further improve reliability of radio links and beams.

### SUMMARY

Embodiments of this application provide a measurement adjustment method and a terminal, so as to resolve the problem that in the related art, RLM measurement adjustment and BFD measurement adjustment (for example, measurement relaxation and measurement enhancement) by terminals are not supported, which does not help implement power saving for the terminals nor helps further improve reliability of radio links and beams.

According to a first aspect, a measurement adjustment method is provided. The method includes: determining, by a terminal according to a preset rule, whether to perform radio link monitoring RLM measurement adjustment and/or beam failure detection BFD measurement adjustment, where the measurement adjustment includes at least one of the following: measurement relaxation, measurement enhancement, or normal measurement.

According to a second aspect, a terminal is provided. The terminal includes: a measurement adjustment module configured to determine, according to a preset rule, whether to perform radio link monitoring RLM measurement adjustment and/or beam failure detection BFD measurement adjustment, where the measurement adjustment includes at least one of the following: measurement relaxation, measurement enhancement, or normal measurement.

According to a third aspect, a terminal is provided. The terminal includes a processor, a memory, and a program or instructions stored in the memory and capable of running on the processor, where when the program or instructions are executed by the processor, the method according to the first aspect is implemented.

According to a fourth aspect, a readable storage medium is provided. The readable storage medium stores a program or instructions, and when the program or instructions are executed by a processor, the method according to the first aspect is implemented.

According to a fifth aspect, a computer program product is provided. The computer program product includes a processor, a memory, and a program or instructions stored in the memory and capable of running on the processor, and when the program or instructions are executed by the processor, the method according to the first aspect is implemented.

According to a sixth aspect, a chip is provided. The chip includes a processor and a communication interface. The communication interface is coupled to the processor, and the processor is configured to run a program or instructions to implement the method according to the first aspect.

In the embodiments of this application, the terminal determines, according to a preset rule, whether to perform RLM measurement adjustment and/or BFD measurement adjustment, or may perform measurement adjustment according to a determining result. Performing (RLM and/or BFD, similar thereafter) measurement relaxation or returning from measurement enhancement to normal measurement helps implement power saving for the terminal. Performing measurement enhancement or returning from measurement relaxation to normal measurement helps further improve reliability of radio links and beams.

### BRIEF DESCRIPTION OF DRAWINGS

FIG. 1 is a block diagram of a wireless communication system according to an embodiment of this application;
FIG. 2 is a schematic flowchart of a measurement adjustment method according to an embodiment of this application;
FIG. 3 is a schematic structural diagram of a terminal according to an embodiment of this application;
FIG. 4 is a schematic structural diagram of a communication device according to an embodiment of this application; and
FIG. 5 is a schematic structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the data used in such a way is interchangeable in appropriate circumstances so that the embodiments of this application can be implemented in other orders than the order illustrated or described herein. Moreover, the objects distinguished by "first" and "second" are usually of one type, and the number of objects is not limited. For example, the number of the first object may be one or more. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

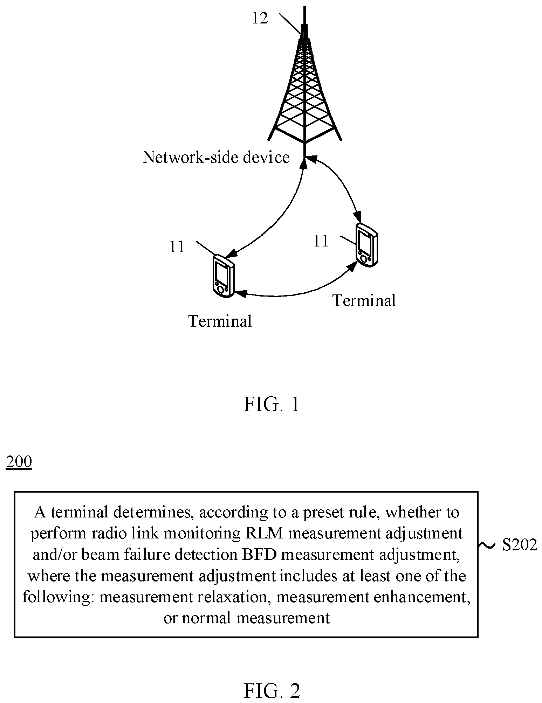

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VLTE), or pedestrian user equipment (PUE). The wearable device includes: a wrist band, earphones, glasses, or the like. It should be noted that a specific type of the terminal 11 is not limited in the embodiments of this application. The network-side device 12 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next-generation NodeB (gNB), a home NodeB, a home evolved NodeB, a WLAN access point, a Wi-Fi node, a transmission reception point (Transmitting Receiving Point, TRP) or other appropriate terms in the art. Provided that the same technical effects are achieved, the base station is not limited to any particular technical term. It should be noted that in the embodiments of this application, only a base station in the NR system is used as an example, but a specific type of the base station is not limited.

The following describes in detail the measurement adjustment method and the terminal provided in the embodiments of this application by using specific embodiments and application scenarios thereof with reference to the accompanying drawings.

As shown in FIG. 2, an embodiment of this application provides a measurement adjustment method 200. The method may be executed by a terminal. In other words, the method may be executed by software or hardware installed in the terminal. The method includes the following steps.

S202. The terminal determines, according to a preset rule, whether to perform radio link monitoring (Radio Link Monitor, RLM) measurement adjustment and/or beam failure detection (Beam Failure Detection, BFD) measurement adjustment, where the measurement adjustment includes at least one of the following: measurement relaxation, measurement enhancement, or normal measurement.

Unless otherwise specified, measurement adjustment described in the embodiments of the specification may include RLM measurement adjustment, BFD measurement adjustment, or both RLM measurement adjustment and BFD measurement adjustment.

For example, the preset rule in this embodiment includes at least one of the following: in-sync (In-Sync, IS) and out-of-sync (Out-Of-Sync) of RLM, an RLM related timer, a beam failure instance (Beam Failure Instance, BFI) of BFD, a BFD related timer, a condition for radio resource management (Radio Resource Management, RRM) measurement relaxation and/or enhancement, an S-measure (S-measure) criteria or whether to start intra-frequency neighboring cell/inter-frequency neighboring cell measurement, indication of a network-side device, a preset condition, a condition for RLM measurement relaxation and/or enhancement, a condition for BFD measurement relaxation and/or enhancement, and the like.

The plurality of preset rules listed above may be used in combination. For example, measurement enhancement is performed only when the RLM related timer is started and N OOSs are detected.

In this embodiment, for example, the terminal determines, according to the preset rule, whether to perform RLM measurement adjustment, and performs RLM measurement adjustment in a case of determining that RLM measurement adjustment needs to be performed, for example, in a case that the preset rule is satisfied, switching from RLM normal measurement to RLM measurement relaxation, or switching from RLM normal measurement to RLM measurement enhancement, or directly switching from RLM measurement relaxation to RLM measurement enhancement, or returning from RLM measurement relaxation to RLM normal measurement, or returning from RLM measurement enhancement to RLM normal measurement, or directly switching from RLM measurement enhancement to RLM measurement relaxation.

In this embodiment, for another example, the terminal determines, according to the preset rule, whether to perform BFD measurement adjustment, and performs BFD measurement adjustment in a case of determining that BFD measurement adjustment needs to be performed, for example, in a case that the preset rule is satisfied, switching from normal BFD measurement to BFD measurement relaxation, or switching from normal BFD measurement to BFD measurement enhancement, or directly switching from BFD measurement relaxation to BFD measurement enhancement, or returning from BFD measurement relaxation to normal BFD measurement, or returning from BFD measurement enhancement to normal BFD measurement, or directly switching from BFD measurement enhancement to BFD measurement relaxation.

In this embodiment, for still another example, the terminal determines, according to the preset rule, whether to perform RLM measurement adjustment or whether to perform BFD measurement adjustment. For specific examples, reference may be made to the description of the two examples described above.

According to the measurement adjustment method in this embodiment of this application, the terminal determines, according to the preset rule, whether to perform RLM measurement adjustment and/or BFD measurement adjustment, or may perform measurement adjustment according to a determining result. Performing (RLM and/or BFD, similar thereafter) measurement relaxation or returning from measurement enhancement to normal measurement helps implement power saving for the terminal. Performing measurement enhancement or returning from measurement relaxation to normal measurement helps further improve reliability of radio links and beams.

It should be noted that measurement relaxation, measurement enhancement, and normal measurement described in the embodiments of the specification are relative concepts, where normal measurement may be a measurement state with no measurement enhancement or no measurement relaxation. Specifically, normal measurement may be measurement performed based on the prior art or based on existing requirements, that is, being ordinary measurement (normal measurement) with no measurement relaxation nor measurement enhancement.

Specifically, (RLM and/or BFD) measurement relaxation described in the embodiments in the specification includes at least one of the following:
1. RLM and/or BFD measurement relaxation in time domain is performed, including at least one of the following:
   (a) extension of a measurement period of RLM and/or BFD measurement L1, or reduction of the number of measurement samples (sample);
   (b) use of a measurement period P1 for normal measurement, use of a measurement period P2 for measurement relaxation, and use of a measurement period P3 for measurement enhancement, where P3<P2<P1;
   (c) extension of a gap of RLM and/or BFD measurement L2/L3 indication (or referred to as L2/L3 measurement); and
   (d) relaxation of measurement requirements corresponding to RLM and/or BFD.
2. In a period of time, no RLM and/or BFD measurement is performed, or less RLM and/or BFD measurement is performed.
3. In a period of time, no RLM and/or BFD higher-layer indication is performed, or less RLM and/or BFD higher-layer indication is performed.
4. RLM and/or BFD measurement relaxation in space domain is performed, that is, the number of beams for RLM and/or BFD measurement is reduced, or measurement relaxation is performed in time domain and frequency domain corresponding to the beams.
5. The number of reference signals for RLM and/or BFD measurement is reduced.

Specifically, the (RLM and/or BFD) measurement enhancement described in the embodiments in the specification includes at least one of the following:
1. RLM and/or BFD measurement enhancement in time domain is performed, including at least one of the following:
   (a) shortening of a measurement period of RLM and/or BFD measurement L1, or increase in the number of measurement samples (sample);
   (b) use of a measurement period P1 for normal measurement, use of a measurement period P2 for measurement relaxation, and use of a measurement period P3 for measurement enhancement, where P3<P2<P1;
   (c) shortening of a gap of RLM and/or BFD measurement L2/L3 indication (or referred to as L2/L3 measurement); and
   (d) enhancement of measurement requirements corresponding to RLM and/or BFD.
2. In a period of time, RLM and/or BFD measurement is enhanced.
3. In a period of time, RLM and/or BFD higher-layer indication is enhanced.
4. RLM and/or BFD measurement in space domain is enhanced, that is, the number of beams for RLM and/or BFD measurement is increased, or measurement enhancement is performed in time domain and frequency domain corresponding to the beams.
5. The number of reference signals for RLM and/or BFD measurement is increased.

The determining, by a terminal according to a preset rule, whether to perform RLM measurement adjustment and/or BFD measurement adjustment described in the embodiment 100 includes at least one of the following 1 to 10:
1. The terminal determines, based on in-sync IS and/or out-of-sync OOS for RLM, whether to perform RLM measurement adjustment and/or BFD measurement adjustment.
   Optionally, that the terminal determines, based on IS and/or OOS for RLM, whether to perform RLM measurement adjustment and/or BFD measurement adjustment includes at least one of the following:
   (1) in a case that the terminal detects one or M1 ISs (or a higher layer receives one or M1 IS indications from a lower layer, similar thereafter), switching to RLM and/or BFD measurement relaxation; or in a case that the terminal detects one or N1 OOSs (or a higher layer receives one or N1 OOS indications from a lower layer, similar thereafter), returning to normal RLM and/or BFD measurement;
   (2) in a case that the terminal detects one or N2 OOSs, switching to RLM and/or BFD measurement enhancement; or in a case that the terminal detects one or M2 ISs, returning to normal RLM and/or BFD measurement; and
   (3) in a case that the terminal detects one or N3 OOSs, switching to RLM and/or BFD measurement enhancement; or in a case that the terminal detects one or M3 ISs, switching to RLM and/or BFD measurement relaxation.
      M1, M2, M3, N1, N2, and N3 are integers greater than 1. The values described above may be equal. For example, M1, M2, and M3 are equal, and N1, N2, and N3 are equal. Certainly, these values may alternatively be unequal.
2. The terminal determines, based on an RLM related timer, whether to perform RLM measurement adjustment and/or BFD measurement adjustment.
   Optionally, that the terminal determines, based on an RLM related timer, whether to perform RLM measurement adjustment and/or BFD measurement adjustment includes at least one of the following (1) to (3):
   (1) in a case that the terminal starts a first timer, switching to RLM and/or BFD measurement enhancement; or in a case that the terminal does not start or stops the first timer or starts a second timer, returning to normal RLM and/or BFD measurement;
   (2) in a case that the terminal does not start or stops a first timer or starts a second timer, switching to RLM and/or BFD measurement relaxation; or in a case that the terminal starts the first timer, returning to normal RLM and/or BFD measurement; and
   (3) in a case that the terminal starts a first timer, switching to RLM and/or BFD measurement enhancement; or in a case that the terminal does not start or stops the first timer or starts a second timer, switching to RLM and/or BFD measurement relaxation.
      The first timer in this embodiment may be a T310 timer in an RLM procedure. The second timer in this embodiment may be a newly defined timer in the RLM procedure. For example, the terminal starts the second timer and performs RLM and/or BFD measurement adjustment when a specified condition is satisfied, and performs RLM and/or BFD measurement adjustment again in a case that the second timer expires.
3. The terminal determines, based on a BFI of BFD, whether to perform RLM measurement adjustment and/or BFD measurement adjustment.
   Optionally, that the terminal determines, based on a BFI of BFD, whether to perform RLM measurement adjustment and/or BFD measurement adjustment includes at least one of the following (1) to (3):
   (1) in a case that the terminal detects one or N4 BFIs (or a higher layer receives one or N4 BFI indications from a lower layer, similar thereafter), switching to RLM and/or BFD measurement enhancement; or in a case that the terminal detects no BFI or detects no more than M4 BFIs within a preset time (for example, within L1 periods), returning to normal RLM and/or BFD measurement;
   (2) in a case that the terminal detects no BFI or detects no more than M5 BFIs within a preset time, switching to RLM and/or BFD measurement relaxation; or in a case that the terminal detects one or N5 BFIs, returning to normal RLM and/or BFD measurement; and
   (3) in a case that the terminal detects one or N6 BFIs, switching to RLM and/or BFD measurement enhancement; or in a case that the terminal detects no BFI or detects no more than M6 BFIs within a preset time, switching to RLM and/or BFD measurement relaxation.

The preset time may alternatively be within a preset number of measurement periods, where the preset time and the preset number of periods may be configured by a network side, or prescribed by a protocol.

M4, M5, M6, N4, N5, and N6 are integers greater than 1. The values described above may be equal. For example, M4, M5, and M6 are equal, and N4, N5, and N6 are equal. Certainly, these values may alternatively be unequal.

Further, the foregoing parameters such as M1 to M6, N1 to N6, and the preset time may be prescribed by the protocol, or configured by a network-side device.

Optionally, the detection of M1, M2, or M3 ISs described in the foregoing embodiment includes one of the following: M1, M2, or M3 consecutive ISs being detected, M1, M2, or M3 ISs being detected within a preset time, and M1, M2, or M3 consecutive ISs being detected within a preset time.

Optionally, the detection of N1, N2, or N3 OOSs described in the foregoing embodiment includes one of the following: N1, N2, or N3 consecutive OOSs being detected, N1, N2, or N3 OOSs being detected within a preset time, and N1, N2, or N3 consecutive OOSs being detected within a preset time.

Optionally, the detection of N4, N5, or N6 BFIs described in the foregoing embodiment includes one of the following: N4, N5, or N6 consecutive BFIs being detected, N4, N5, or N6 BFIs being detected within a preset time, and N4, N5, or N6 consecutive BFIs being detected within a preset time.

Optionally, the detection of no more than M4, M5, or M6 BFIs described in the foregoing embodiment includes one of the following: no more than M4, M5, or M6 consecutive BFIs being detected, no more than M4, M5, or M6 BFIs being detected within a preset time, and no more than M4, M5, or M6 consecutive BFIs being detected within a preset time.

The preset time may alternatively be within a preset number of measurement periods, where the preset time and the preset number of the periods may be configured by the network side, or prescribed by the protocol.

4. The terminal determines, based on a BFD related timer, whether to perform RLM measurement adjustment and/or BFD measurement adjustment.

Optionally, that the terminal determines, based on a BFD related timer, whether to perform RLM measurement adjustment and/or BFD measurement adjustment includes at least one of the following (1) to (3):
(1) in a case that the terminal starts a first timer, switching to RLM and/or BFD measurement enhancement; or in a case that the terminal does not start or stops the first timer or starts a second timer, returning to normal RLM and/or BFD measurement;
(2) in a case that the terminal does not start or stops a first timer or starts a second timer, switching to RLM and/or BFD measurement relaxation; or in a case that the terminal starts the first timer, returning to normal RLM and/or BFD measurement; and
(3) in a case that the terminal starts a first timer, switching to RLM and/or BFD measurement enhancement; or in a case that the terminal does not start or stops the first timer or starts a second timer, switching to RLM and/or BFD measurement relaxation.

The first timer in this embodiment may be a beam failure detection timer (BeamFailureDetectionTimer) in a BFD procedure. The second timer in this embodiment may be a newly defined timer in the BFD procedure. For example, the terminal starts the second timer and performs RLM and/or BFD measurement adjustment when a specified condition is satisfied, and performs RLM and/or BFD measurement adjustment again in a case that the second timer expires.

5. The terminal determines, based on a condition for RRM measurement relaxation and/or enhancement, whether to perform RLM measurement adjustment and/or BFD measurement adjustment.

Optionally, that the terminal determines, based on a condition for RRM measurement relaxation and/or enhancement, whether to perform RLM and/or BFD measurement adjustment includes at least one of the following (1) to (3):
(1) in a case that the condition for RRM measurement relaxation is satisfied or the condition for RRM measurement enhancement is not satisfied, switching to RLM and/or BFD measurement relaxation; or in a case that the condition for RRM measurement relaxation is not satisfied, returning to normal RLM and/or BFD measurement;
(2) in a case that the condition for RRM measurement enhancement is satisfied or the condition for RRM measurement relaxation is not satisfied, switching to RLM and/or BFD measurement enhancement; or in a case that the condition for RRM measurement enhancement is not satisfied, returning to normal RLM and/or BFD measurement; and
(3) in a case that the condition for RRM measurement relaxation is satisfied or the condition for RRM measurement enhancement is not satisfied, switching to RLM and/or BFD measurement relaxation; or in a case that the condition for RRM measurement enhancement is satisfied or the condition for RRM measurement relaxation is not satisfied, switching to RLM and/or BFD measurement enhancement.

6. The terminal determines, based on whether an S-measure criteria is satisfied or whether intra-frequency neighboring cell/inter-frequency neighboring cell measurement is started, whether to perform RLM measurement adjustment and/or BFD measurement adjustment.

The S-measure criteria being satisfied as described in this embodiment includes: a serving cell measurement value > a threshold S_{nonIntrasSearch} for starting inter-frequency neighboring cell measurement, or a serving cell measurement value > a threshold S_{intraSearch} for starting intra-frequency neighboring cell measurement.

Optionally, that the terminal determines, based on whether an S-measure criteria is satisfied or whether intra-frequency neighboring cell/inter-frequency neighboring cell measurement is started, whether to perform RLM measurement adjustment and/or BFD measurement adjustment includes at least one of the following (1) to (3):
(1) in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, returning to normal RLM and/or BFD measurement;
(2) in a case that the S-measure criteria is not satisfied or the intra-frequency neighboring cell/inter-frequency neighboring cell measurement is started, switching to RLM and/or BFD measurement enhancement; or in a case that the S-measure criteria is satisfied or the intra-frequency neighboring cell/inter-frequency neighboring cell measurement is not started, returning to normal RLM and/or BFD measurement; and
(3) in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, switching to RLM and/or BFD measurement enhancement.

7. The terminal determines, based on whether an indication of the network-side device has been received, whether to perform RLM measurement adjustment and/or BFD measurement adjustment.

Optionally, that the terminal determines, based on whether an indication of the network-side device has been received, whether to perform RLM measurement adjustment and/or BFD measurement adjustment includes at least one of the following (1) to (3):
(1) in a case that the terminal has received first indication information transmitted by the network-side device, switching to RLM and/or BFD measurement relaxation; or in a case that the terminal has received no first indication information transmitted by the network-side device, returning to normal RLM and/or BFD measurement;
(2) in a case that the terminal has received no first indication information transmitted by the network-side device, switching to RLM and/or BFD measurement enhancement; or in a case that the terminal has received first indication information transmitted by the network-side device, returning to normal RLM and/or BFD measurement; and
(3) in a case that the terminal has received first indication information transmitted by the network-side device, switching to RLM and/or BFD measurement relaxation; or in a case that the terminal has received no first indication information transmitted by the network-side device, switching to RLM and/or BFD measurement enhancement.

The first indication information includes at least one of the following (1) to (3):
(1) an RRC message, a medium access control control element (Media Access Control-Control Element, MAC CE), or downlink control information (Downlink Control Information, DCI) for indicating that the terminal is to perform RLM and/or BFD measurement relaxation;
(2) an RRC message, a MAC CE, or a DCI activation command for activating a time domain synchronous (Time Domain Synchronous, TDS) state; and
(3) a transmission configuration indicator (Transmission Configuration Indicator, TCI) state addition (addition) or release (release) command.

8. The terminal determines, based on a preset condition, whether to perform RLM measurement adjustment and/or BFD measurement adjustment.

Optionally, the preset condition includes a first condition and/or a second condition, and that the terminal determines, based on a preset condition, whether to perform RLM measurement adjustment and/or BFD measurement adjustment includes at least one of the following (1) to (3):
(1) in a case that the first condition is satisfied, switching to RLM and/or BFD measurement relaxation; or in a case that the second condition is satisfied, returning to normal RLM and/or BFD measurement;
(2) in a case that the second condition is satisfied, switching to RLM and/or BFD measurement enhancement; or in a case that the first condition is satisfied, returning to normal RLM and/or BFD measurement; and
(3) in a case that the first condition is satisfied, switching to RLM and/or BFD measurement relaxation; or in a case that the second condition is satisfied, switching to RLM and/or BFD measurement enhancement.

The first condition includes at least one of the following: a moving speed of the terminal being lower than a threshold, being located in cell center, having power saving requirements, being in a power saving mode, remaining power being lower than a threshold, a DRX period being greater than a threshold, and the terminal having low service delay requirements.

The second condition includes at least one of the following: a moving speed of the terminal being greater than a threshold, being located at cell edge, having no power saving requirements, not being in a power saving mode, remaining power being greater than a threshold, a DRX period being less than a threshold, and the terminal having high service delay requirements. In this embodiment, the moving speed of the terminal is determined based on at least one of the following: an absolute moving speed related indicator of the terminal, the number of cells/beams which the terminal camps on or moves to within a preset time, and an amount of variation of target measurement.

In this embodiment, a location (for example, latitude and longitude, an azimuth relative to a specific cell, or being camping on which beam in which cell) of the terminal is considered: from the perspective of network planning and optimization of big data, there are some special areas in the network, and network quality in the special areas changes quickly, or a plurality of cells/beams provide coverage. In this case, if the terminal enters the special areas, more frequent RLM/BFD (which is measurement enhancement) is to be triggered to ensure communication performance. It can also be extended to a combination of the location of the terminal and other factors.

9. The terminal determines, based on a condition for RLM measurement relaxation and/or enhancement, whether to perform BFD measurement adjustment.

Optionally, that the terminal determines, based on a condition for RLM measurement relaxation and/or enhancement, whether to perform BFD measurement adjustment includes at least one of the following (1) to (3):
(1) in a case that the condition for RLM measurement relaxation is satisfied or the condition for RLM measurement enhancement is not satisfied, switching to BFD measurement relaxation; or in a case that the condition for RLM measurement relaxation is not satisfied, returning to normal BFD measurement;
(2) in a case that the condition for RLM measurement enhancement is satisfied or the condition for RLM measurement relaxation is not satisfied, switching to BFD measurement enhancement; or in a case that the condition for RLM measurement enhancement is not satisfied, returning to normal BFD measurement; and
(3) in a case that the condition for RLM measurement relaxation is satisfied or the condition for RLM measurement enhancement is not satisfied, switching to BFD measurement relaxation; or in a case that the condition for RLM measurement enhancement is satisfied or the condition for RLM measurement relaxation is not satisfied, switching to BFD measurement enhancement.

10. The terminal determines, based on a condition for BFD measurement relaxation and/or enhancement, whether to perform RLM measurement adjustment.

It should be noted that the condition for RLM measurement adjustment described above may be a condition for RLM measurement adjustment defined in the present invention, or may be another condition for RLM measurement adjustment that is not defined by the present invention.

Optionally, that the terminal determines, based on a condition for BFD measurement relaxation and/or enhancement, whether to perform RLM measurement adjustment includes at least one of the following (1) to (3):
(1) in a case that the condition for BFD measurement relaxation is satisfied or the condition for BFD measurement enhancement is not satisfied, switching to RLM measurement relaxation; or in a case that the condition for BFD measurement relaxation is not satisfied, returning to RLM normal measurement;
(2) in a case that the condition for BFD measurement enhancement is satisfied or the condition for BFD measurement relaxation is not satisfied, switching to RLM measurement enhancement; or in a case that the condition for BFD measurement enhancement is not satisfied, returning to RLM normal measurement; and
(3) in a case that the condition for BFD measurement relaxation is satisfied or the condition for BFD measurement enhancement is not satisfied, switching to RLM measurement relaxation; or in a case that the condition for BFD measurement enhancement is satisfied or the condition for BFD measurement relaxation is not satisfied, switching to RLM measurement enhancement.

It should be noted that the condition for BFD measurement adjustment described above may be a condition for BFD measurement adjustment defined in the present invention, or may be another condition for BFD measurement adjustment that is not defined by the present invention.

Optionally, in the foregoing embodiments, before the terminal determines, according to the preset rule, whether to perform RLM measurement adjustment and/or BFD measurement adjustment, the method further includes: receiving, by the terminal, configuration information from the network-side device, where the configuration information is used for configuring a measurement adjustment related parameter.

The configuration information may be configured for the terminal by using a broadcast message, a system message, and an RRC dedicated message.

The measurement adjustment related parameter indicates that the network-side device supports RLM measurement adjustment and/or BFD measurement adjustment. Specifically, if the network-side device is configured with a measurement adjustment related parameter, it implicitly indicates measurement adjustment being supported.

The measurement adjustment related parameter includes at least one of the following (1) to (4):
(1) a value of a related timer after measurement adjustment and/or a maximum value of a counter, for example, a T310 counter, a T311 counter, an N310 counter, an N311 counter, or a BFI counter;
(2) a threshold of a timer for determining start or stop of measurement adjustment, and/or a threshold of a counter (which is N1 to N6, M1 to M6, and the like described in the foregoing embodiments), or a preset time length, or the preset number of periods;
(3) measurement configuration after measurement adjustment: including a measurement period after measurement adjustment, a measurement gap, a measurement requirement, a time length in which no measurement is required, a time length in which measurement is required, and an RLM/BFD related requirement; and
(4) permission for RLM and/or BFD measurement adjustment by the terminal.

Optionally, in the foregoing embodiments, before the terminal determines, according to a preset rule, whether to perform RLM measurement adjustment and/or BFD measurement adjustment, the method further includes: receiving, by the terminal, second indication information, where the second indication information is used to indicate a measurement adjustment related parameter and indicate that the terminal is to perform RLM measurement adjustment and/or BFD measurement adjustment.

In one example, the second indication information is included in a system information block SIB message and/or an advance indication message, where the advance indication message includes at least one of the following: a go-to-sleep (Go-To-Sleep, GTS) signal and a wake up signal (Wake-UP-Signaling, WUS), where the DCI includes scheduling DCI or other newly designed DCI.

In one specific example, the second indication information is included in a SIB message and is used to indicate at least one of the following: (1) whether a serving cell supports RLM measurement adjustment and/or BFD measurement adjustment; (2) an RLM measurement adjustment related parameter for the serving cell; (3) a BFD measurement adjustment related parameter for the serving cell; (4) a type of the serving cell, for example, an indoor macrocell, an outdoor macrocell, or an outdoor microcell; and (5) permission for measurement adjustment of the terminal in the serving cell.

The foregoing embodiments may further include the following steps: transmitting, by the terminal, request information to the network-side device, where the request information includes at least one of the following: an RLM measurement adjustment option and/or BFD measurement adjustment option expected (required, or requested, or preferred) by the terminal, and an RLM measurement adjustment related parameter and/or BFD measurement adjustment related parameter expected by the terminal. The measurement adjustment option includes at least one of the following: measurement relaxation, measurement enhancement, and normal measurement. The measurement adjustment related parameter includes at least one of the following: several timer thresholds in the foregoing embodiments, several measurement adjustment durations described above, and the like.

Specifically, the request information may be added to user assistance information (UE assistance information, UAI) or uplink information (LTE uplink information) for transmission.

Optionally, the preset rule related configuration (certainly, the configuration is not merely for configuring the preset rule) described in the foregoing embodiments is configured for one of the following (1) to (5):
(1) per terminal: means per-UE configuration, where the network configures a respective measurement adjustment determining related parameter (corresponding to the preset rule in the foregoing embodiments) for each terminal;
(2) per cell/cell group: for example, measurement adjustment determining related parameters configured by the network in coverage of one cell are consistent, and the terminal uses the related parameters in the coverage of the cell;
(3) per frequency domain/carrier/bandwidth/bandwidth part: means per-frequency/carrier/bandBWP configuration, where for example, measurement adjustment determining related parameters configured by the network in a range of one frequency/carrier/bandBWP are consistent;
(4) per terminal per frequency domain/carrier/bandwidth/bandwidth part: means per-UE per-frequency/carrier/bandBWP configuration, where for example, measurement adjustment determination related parameters configured per terminal by the network in a range of one frequency/carrier/bandBWP are consistent; and
(5) per beam: means per-beam configuration.

It should be noted that the measurement adjustment method provided in the embodiments of this application may be executed by a terminal, or a control module for executing the measurement adjustment method in the terminal. In the embodiments of this application, the terminal provided by the embodiments of this application is described by using an example in which the terminal executes the measurement adjustment method.

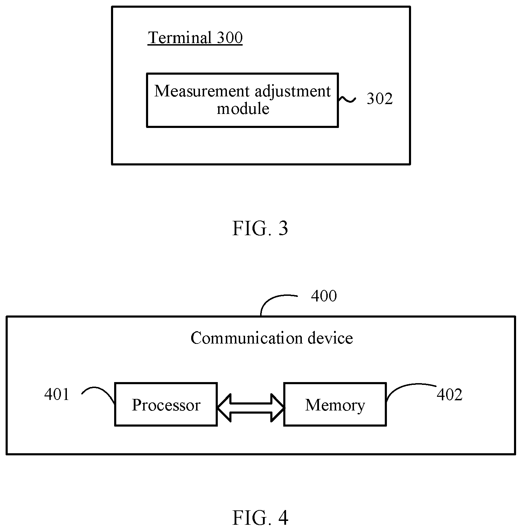

FIG. 3 is a schematic structural diagram of a terminal according to an embodiment of this application. As shown in FIG. 3, the terminal 300 includes the following module:
a measurement adjustment module 302, configured to determine, according to a preset rule, whether to perform radio link monitoring RLM measurement adjustment and/or beam failure detection BFD measurement adjustment, where the measurement adjustment includes at least one of the following: measurement relaxation, measurement enhancement, or normal measurement.

In this embodiment of this application, the terminal determines, according to a preset rule, whether to perform RLM measurement adjustment and/or BFD measurement adjustment, or may perform measurement adjustment according to a determining result. Performing (RLM and/or BFD, similar thereafter) measurement relaxation or returning from measurement enhancement to normal measurement helps implement power saving for the terminal. Performing measurement enhancement or returning from measurement relaxation to normal measurement helps further improve reliability of radio links and beams.

Optionally, in an embodiment, the measurement adjustment module 302 may be configured to perform at least one of the following (1) to (10):
(1) determining, by the terminal based on in-sync IS and/or out-of-sync OOS for RLM, whether to perform RLM measurement adjustment and/or BFD measurement adjustment;
(2) determining, by the terminal based on an RLM related timer, whether to perform RLM measurement adjustment and/or BFD measurement adjustment;
(3) determining, by the terminal based on a beam failure instance BFI of BFD, whether to perform RLM measurement adjustment and/or BFD measurement adjustment;
(4) determining, by the terminal based on a BFD related timer, whether to perform RLM measurement adjustment and/or BFD measurement adjustment;
(5) determining, by the terminal based on a condition for radio resource management RRM measurement relaxation and/or enhancement, whether to perform RLM measurement adjustment and/or BFD measurement adjustment;
(6) determining, by the terminal based on whether an S-measure criteria is satisfied or whether intra-frequency neighboring cell/inter-frequency neighboring cell measurement is started, whether to perform RLM measurement adjustment and/or BFD measurement adjustment;
(7) determining, by the terminal based on whether an indication of the network-side device has been received, whether to perform RLM measurement adjustment and/or BFD measurement adjustment;
(8) determining, by the terminal based on a preset condition, whether to perform RLM measurement adjustment and/or BFD measurement adjustment;
(9) determining, by the terminal based on a condition for RLM measurement relaxation and/or enhancement, whether to perform BFD measurement adjustment; and
(10) determining, by the terminal based on a condition for BFD measurement relaxation and/or enhancement, whether to perform RLM measurement adjustment.

Optionally, in an embodiment, the measurement adjustment module 302 may be configured to perform at least one of the following (1) to (3):
(1) in a case that the terminal detects one or M1 ISs, switching to RLM and/or BFD measurement relaxation; or in a case that the terminal detects one or N1 OOSs, returning to normal RLM and/or BFD measurement;
(2) in a case that the terminal detects one or N2 OOSs, switching to RLM and/or BFD measurement enhancement; or in a case that the terminal detects one or M2 ISs, returning to normal RLM and/or BFD measurement; and
(3) in a case that the terminal detects one or N3 OOSs, switching to RLM and/or BFD measurement enhancement; or in a case that the terminal detects one or M3 ISs, switching to RLM and/or BFD measurement relaxation.

M1, M2, M3, N1, N2, and N3 are integers greater than 1.

Optionally, in an embodiment, the measurement adjustment module 302 may be configured to perform at least one of the following (1) to (3):
(1) in a case that the terminal starts a first timer, switching to RLM and/or BFD measurement enhancement; or in a case that the terminal does not start or stops the first timer or starts a second timer, returning to normal RLM and/or BFD measurement;
(2) in a case that the terminal does not start or stops a first timer or starts a second timer, switching to RLM and/or BFD measurement relaxation; or in a case that the terminal starts the first timer, returning to normal RLM and/or BFD measurement; and
(3) in a case that the terminal starts a first timer, switching to RLM and/or BFD measurement enhancement; or in a case that the terminal does not start or stops the first timer or starts a second timer, switching to RLM and/or BFD measurement relaxation.

Optionally, in an embodiment, the measurement adjustment module 302 may be configured to perform at least one of the following (1) to (3):
(1) in a case that the terminal detects one or N4 BFIs, switching to RLM and/or BFD measurement enhancement; or in a case that the terminal detects no BFI or detects no more than M4 BFIs within a preset time, returning to normal RLM and/or BFD measurement;
(2) in a case that the terminal detects no BFI or detects no more than M5 BFIs within a preset time, switching to RLM and/or BFD measurement relaxation; or in a case that the terminal detects one or N5 BFIs, returning to normal RLM and/or BFD measurement; and
(3) in a case that the terminal detects one or N6 BFIs, switching to RLM and/or BFD measurement enhancement; or in a case that the terminal detects no BFI or detects no more than M6 BFIs within a preset time, switching to RLM and/or BFD measurement relaxation.

M4, M5, M6, N4, N5, and N6 are integers greater than 1.

Optionally, in an embodiment, at least one of the following (1) to (4) is satisfied:
(1) The detection of M1, M2, or M3 ISs includes one of the following: M1, M2, or M3 consecutive ISs being detected, M1, M2, or M3 ISs being detected within a preset time, and M1, M2, or M3 consecutive ISs being detected within a preset time.
(2) The detection of N1, N2, or N3 OOSs includes one of the following: N1, N2, orN3 consecutive OOSs being detected, N1, N2, orN3 OOSs being detected within a preset time, and N1, N2, or N3 consecutive OOSs being detected within a preset time.
(3) The detection of N4, N5, or N6 BFIs includes one of the following: N4, N5, or N6 consecutive BFIs being detected, N4, N5, or N6 BFIs being detected within a preset time, and N4, N5, or N6 consecutive BFIs being detected within a preset time.
(4) The detection of no more than M4, M5, or M6 BFIs includes one of the following: no more than M4, M5, or M6 consecutive BFIs being detected, no more than M4, M5, or M6 BFIs being detected within a preset time, and no more than M4, M5, or M6 consecutive BFIs being detected within a preset time.

Optionally, in an embodiment, the measurement adjustment module 302 may be configured to perform at least one of the following (1) to (3):
(1) in a case that the terminal starts a first timer, switching to RLM and/or BFD measurement enhancement; or in a case that the terminal does not start or stops the first timer or starts a second timer, returning to normal RLM and/or BFD measurement;
(2) in a case that the terminal does not start or stops a first timer or starts a second timer, switching to RLM and/or BFD measurement relaxation; or in a case that the terminal starts the first timer, returning to normal RLM and/or BFD measurement; and
(3) in a case that the terminal starts a first timer, switching to RLM and/or BFD measurement enhancement; or in a case that the terminal does not start or stops the first timer or starts a second timer, switching to RLM and/or BFD measurement relaxation.

Optionally, in an embodiment, the measurement adjustment module 302 may be configured to perform at least one of the following (1) to (3):
(1) in a case that the condition for RRM measurement relaxation is satisfied or the condition for RRM measurement enhancement is not satisfied, switching to RLM and/or BFD measurement relaxation; or in a case that the condition for RRM measurement relaxation is not satisfied, returning to normal RLM and/or BFD measurement;
(2) in a case that the condition for RRM measurement enhancement is satisfied or the condition for RRM measurement relaxation is not satisfied, switching to RLM and/or BFD measurement enhancement; or in a case that the condition for RRM measurement enhancement is not satisfied, returning to normal RLM and/or BFD measurement; and
(3) in a case that the condition for RRM measurement relaxation is satisfied or the condition for RRM measurement enhancement is not satisfied, switching to RLM and/or BFD measurement relaxation; or in a case that the condition for RRM measurement enhancement is satisfied or the condition for RRM measurement relaxation is not satisfied, switching to RLM and/or BFD measurement enhancement.

Optionally, in an embodiment, the measurement adjustment module 302 may be configured to perform at least one of the following (1) to (3):
(1) in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, returning to normal RLM and/or BFD measurement;
(2) in a case that the S-measure criteria is not satisfied or the intra-frequency neighboring cell/inter-frequency neighboring cell measurement is started, switching to RLM and/or BFD measurement enhancement; or in a case that the S-measure criteria is satisfied or the intra-frequency neighboring cell/inter-frequency neighboring cell measurement is not started, returning to normal RLM and/or BFD measurement; and
(3) in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, switching to RLM and/or BFD measurement enhancement.

Optionally, in an embodiment, the measurement adjustment module 302 may be configured to perform at least one of the following (1) to (3):
(1) in a case that the terminal has received first indication information transmitted by the network-side device, switching to RLM and/or BFD measurement relaxation; or in a case that the terminal has received no first indication information transmitted by the network-side device, returning to normal RLM and/or BFD measurement;
(2) in a case that the terminal has received no first indication information transmitted by the network-side device, switching to RLM and/or BFD measurement enhancement; or in a case that the terminal has received first indication information transmitted by the network-side device, returning to normal RLM and/or BFD measurement; and
(3) in a case that the terminal has received first indication information transmitted by the network-side device, switching to RLM and/or BFD measurement relaxation; or in a case that the terminal has received no first indication information transmitted by the network-side device, switching to RLM and/or BFD measurement enhancement.

Optionally, in an embodiment, the first indication information includes at least one of the following:
(1) an RRC message, a MAC CE, or DCI for indicating that the terminal is to perform RLM and/or BFD measurement relaxation;
(2) an RRC message, a MAC CE, or a DCI activation command for activating a time domain synchronous TDS state; and
(3) a transmission configuration indicator TCI state addition or release command.

Optionally, in an embodiment, the preset condition includes a first condition and/or a second condition, and the measurement adjustment module 302 is configured to perform at least one of the following:
(1) in a case that the first condition is satisfied, switching to RLM and/or BFD measurement relaxation; or in a case that the second condition is satisfied, returning to normal RLM and/or BFD measurement;
(2) in a case that the second condition is satisfied, switching to RLM and/or BFD measurement enhancement; or in a case that the first condition is satisfied, returning to normal RLM and/or BFD measurement; and
(3) in a case that the first condition is satisfied, switching to RLM and/or BFD measurement relaxation; or in a case that the second condition is satisfied, switching to RLM and/or BFD measurement enhancement.

The first condition includes at least one of the following: a moving speed of the terminal being lower than a threshold, being located in cell center, having power saving requirements, being in a power saving mode, remaining power being lower than a threshold, a DRX period being greater than a threshold, and the terminal having low service delay requirements.

The second condition includes at least one of the following: a moving speed of the terminal being greater than a threshold, being located at cell edge, having no power saving requirements, not being in a power saving mode, remaining power being greater than a threshold, a DRX period being less than a threshold, and the terminal having high service delay requirements.

Optionally, in an embodiment, the moving speed of the terminal is determined based on at least one of the following: an absolute moving speed related indicator of the terminal, the number of cells/beams which the terminal camps on or moves to within a preset time, and an amount of variation of target measurement.

Optionally, in an embodiment, the measurement adjustment module 302 may be configured to perform at least one of the following (1) to (3):
(1) in a case that the condition for RLM measurement relaxation is satisfied or the condition for RLM measurement enhancement is not satisfied, switching to BFD measurement relaxation; or in a case that the condition for RLM measurement relaxation is not satisfied, returning to normal BFD measurement;
(2) in a case that the condition for RLM measurement enhancement is satisfied or the condition for RLM measurement relaxation is not satisfied, switching to BFD measurement enhancement; or in a case that the condition for RLM measurement enhancement is not satisfied, returning to normal BFD measurement; and
(3) in a case that the condition for RLM measurement relaxation is satisfied or the condition for RLM measurement enhancement is not satisfied, switching to BFD measurement relaxation; or in a case that the condition for RLM measurement enhancement is satisfied or the condition for RLM measurement relaxation is not satisfied, switching to BFD measurement enhancement.

Optionally, in an embodiment, the measurement adjustment module 302 may be configured to perform at least one of the following (1) to (3):
(1) in a case that the condition for BFD measurement relaxation is satisfied or the condition for BFD measurement enhancement is not satisfied, switching to RLM measurement relaxation; or in a case that the condition for BFD measurement relaxation is not satisfied, returning to RLM normal measurement;
(2) in a case that the condition for BFD measurement enhancement is satisfied or the condition for BFD measurement relaxation is not satisfied, switching to RLM measurement enhancement; or in a case that the condition for BFD measurement enhancement is not satisfied, returning to RLM normal measurement; and
(3) in a case that the condition for BFD measurement relaxation is satisfied or the condition for BFD measurement enhancement is not satisfied, switching to RLM measurement relaxation; or in a case that the condition for BFD measurement enhancement is satisfied or the condition for BFD measurement relaxation is not satisfied, switching to RLM measurement enhancement.

Optionally, in an embodiment, the terminal 300 further includes a receiving module, where the receiving module may be configured to receive configuration information from a network-side device, and the configuration information is used for configuring a measurement adjustment related parameter.

Optionally, in an embodiment, the measurement adjustment related parameter indicates that the network-side device supports RLM measurement adjustment and/or BFD measurement adjustment.

Optionally, in an embodiment, the measurement adjustment related parameter includes at least one of the following (1) to (4): (1) a value of a related timer after measurement adjustment and/or a maximum value of a counter; (2) a threshold of a timer for determining start or stop of measurement adjustment, and/or a threshold of a counter, or a preset time length, or a preset number of periods; (3) a measurement configuration after measurement adjustment; and (4) permission for RLM and/or BFD measurement adjustment by the terminal.

Optionally, in an embodiment, the terminal 300 further includes a receiving module, where the receiving module may be configured to receive second indication information, and the second indication information is used to indicate a measurement adjustment related parameter and indicate that the terminal is to perform RLM measurement adjustment and/or BFD measurement adjustment.

Optionally, in an embodiment, the second indication information is included in a system information block SIB message and/or an advance indication message, where the advance indication message includes at least one of the following: a go-to-sleep GTS signal, a wake up signal WUS, and downlink control information DCI.

Optionally, in an embodiment, the second indication information is included in a SIB message and is used to indicate at least one of the following: whether a serving cell supports RLM measurement adjustment and/or BFD measurement adjustment; an RLM measurement adjustment related parameter for the serving cell; a BFD measurement adjustment related parameter for the serving cell; a type of the serving cell; and permission for measurement adjustment of the terminal in the serving cell.

Optionally, in an embodiment, the terminal 300 further includes a transmitting module that may be configured to transmit request information to the network-side device, where the request information includes at least one of the following: an RLM measurement adjustment option and/or BFD measurement adjustment option expected by the terminal, and an RLM measurement adjustment related parameter and/or BFD measurement adjustment related parameter expected by the terminal, where the measurement adjustment option includes at least one of the following: measurement relaxation, measurement enhancement, and normal measurement.

Optionally, in an embodiment, the preset rule related configuration is configured based on one of the following: per terminal, per cell/cell group, per frequency domain/carrier/bandwidth/bandwidth part, per terminal per frequency domain/carrier/bandwidth/bandwidth part, and per beam.

For the terminal 300 in this embodiment of this application, reference may be made to the procedures of the method 200 corresponding to this embodiment of this application. In addition, the units/modules of the terminal 300 and the other operations and/or functions described above are respectively used to implement corresponding procedures of the method 200, with same or equivalent technical effects achieved. For brevity, details are not described herein again.

The terminal in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (Television, TV), a teller machine, a self-service machine, or the like, which is not specifically limited in this embodiment of this application.

The terminal in this embodiment of this application may be an apparatus having an operating system. The operating system may be an Android (Android) operating system, an iOS operating system, or other possible operating systems, and is not specifically limited in this embodiment of this application.

The terminal provided in this embodiment of this application can implement the processes implemented in the method embodiment of FIG. 2, with same technical effects achieved. To avoid repetition, details are not described herein again.

Optionally, as shown in FIG. 4, an embodiment of this application further provides a communication device 400, including a processor 401, a memory 402, and a program or instructions stored in the memory 402 and capable of running on the processor 401. For example, in a case that the communication device 400 is a terminal, when the program or instructions are executed by the processor 401, the processes of the foregoing measurement adjustment method embodiment are implemented, with same technical effects achieved. To avoid repetition, details are not described herein again.

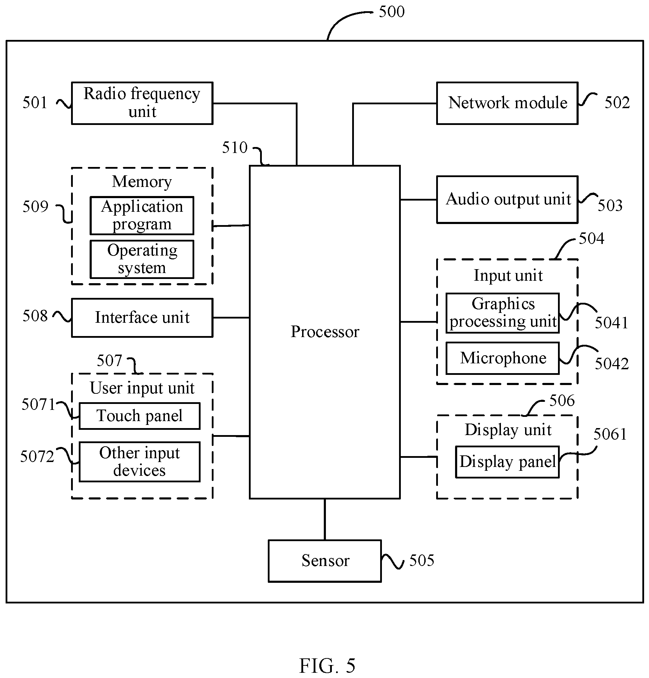

FIG. 5 is a schematic diagram of a hardware structure of a terminal for implementing this embodiment of this application.

The terminal 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (such as a battery) for supplying power to the components. The power supply may be logically connected to the processor 510 through a power management system. In this way, functions such as charge management, discharge management, and power consumption management are implemented using the power management system. The structure of the terminal shown in FIG. 5 does not constitute any limitation on the terminal. The terminal may include more or fewer components than shown in FIG. 5, or a combination of some components, or the components disposed differently. Details are not described herein again.

It should be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, and the like. The user input unit 507 may include a touch panel 5071 and other input devices 5072. The touch panel 5071 is also referred to as a touchscreen. The touch panel 5071 may include two parts: a touch detection apparatus and a touch controller. The other input devices 5072 may include but be not limited to a physical keyboard, a function key (such as a volume control key or an on/off key), a trackball, a mouse, and a joystick. Details are not described herein.

In this embodiment of this application, the radio frequency unit 501 transmits downlink data received from a network-side device to the processor 510 for processing, and in addition, transmits uplink data to the network-side device. Generally, the radio frequency unit 501 includes but is not limited to an antenna, at least one amplifier, a transceiver, a coupler, a low noise amplifier, a duplexer, and the like.

The memory 509 may be configured to store software programs or instructions and various data. The memory 509 may mainly include a program or instruction storage region and a data storage region. The program or instruction storage region may store an operating system, an application program or instructions required by at least one function (for example, an audio play function or an image play function), and the like. In addition, the memory 509 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 510 may include one or more processing units. Optionally, an application processor and a modem processor may be integrated in the processor 510. The application processor primarily processes an operating system, a user interface, an application program or instructions, and the like. The modem processor primarily processes radio communication. For example, the modem processor is a baseband processor. It can be understood that the modem processor may alternatively be not integrated in the processor 510.

The processor 510 is configured to determine, according to a preset rule, whether to perform radio link monitoring RLM measurement adjustment and/or beam failure detection BFD measurement adjustment, where the measurement adjustment comprises at least one of the following: measurement relaxation, measurement enhancement, or normal measurement.

In this embodiment of this application, the terminal determines, according to a preset rule, whether to perform RLM measurement adjustment and/or BFD measurement adjustment, or may perform measurement adjustment according to a determining result. Performing (RLM and/or BFD, similar thereafter) measurement relaxation or returning from measurement enhancement to normal measurement helps implement power saving for the terminal. Performing measurement enhancement or returning from measurement relaxation to normal measurement helps further improve reliability of radio links and beams.

The terminal 500 provided in this embodiment of this application can further implement the processes of the foregoing measurement adjustment method embodiment, with same technical effects achieved. To avoid repetition, details are not described herein again.

An embodiment of this application further provides a readable storage medium. The readable storage medium is volatile or non-volatile, and stores a program or instructions. When the program or instructions are executed by a processor, the processes of the foregoing measurement adjustment method embodiment are implemented, with same technical effects achieved. To avoid repetition, details are not described again herein again.

The processor may be a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement the processes of the foregoing measurement adjustment method embodiment, with same technical effects achieved. To avoid repetition, details are not described herein again.

It should be understood that the chip described in this embodiment of this application may also be referred to as a system-level chip, a system chip, a chip system, a system-on-chip, or the like.

An embodiment of this application further provides a computer program product, where the computer program product is stored in a non-transient memory, and the computer program product is executed by at least one processor to implement the processes of the foregoing measurement adjustment method embodiment, with same technical effects achieved. To avoid repetition, details are not described herein again.

An embodiment of this application further provides a communication device configured to execute processes of the foregoing measurement adjustment method embodiment, with same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and various steps may alternatively be added, omitted, or combined. In addition, features described with reference to some examples may be combined in other examples.

According to the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A measurement adjustment method, wherein the method comprises:
determining, by a terminal according to a preset rule, whether to perform radio link monitoring RLM measurement adjustment and/or beam failure detection BFD measurement adjustment, wherein the measurement adjustment comprises at least one of the following: measurement relaxation, measurement enhancement, or normal measurement.

2. The method according to claim 1, wherein the determining, by a terminal according to a preset rule, whether to perform RLM measurement adjustment and/or BFD measurement adjustment comprises at least one of the following:
determining, by the terminal based on in-sync IS and/or out-of-sync OOS for RLM, whether to perform RLM measurement adjustment and/or BFD measurement adjustment;
determining, by the terminal based on an RLM related timer, whether to perform RLM measurement adjustment and/or BFD measurement adjustment;
determining, by the terminal based on a beam failure instance BFI of BFD, whether to perform RLM measurement adjustment and/or BFD measurement adjustment;
determining, by the terminal based on a BFD related timer, whether to perform RLM measurement adjustment and/or BFD measurement adjustment;
determining, by the terminal based on a condition for radio resource management RRM measurement relaxation and/or enhancement, whether to perform RLM measurement adjustment and/or BFD measurement adjustment;
determining, by the terminal based on whether an S-measure criteria is satisfied or whether intra-frequency neighboring cell/inter-frequency neighboring cell measurement is started, whether to perform RLM measurement adjustment and/or BFD measurement adjustment;
determining, by the terminal based on whether an indication of a network-side device has been received, whether to perform RLM measurement adjustment and/or BFD measurement adjustment;
determining, by the terminal based on a preset condition, whether to perform RLM measurement adjustment and/or BFD measurement adjustment;
determining, by the terminal based on a condition for RLM measurement relaxation and/or enhancement, whether to perform BFD measurement adjustment; and
determining, by the terminal based on a condition for BFD measurement relaxation and/or enhancement, whether to perform RLM measurement adjustment.

3. The method according to claim 2, wherein the determining, by the terminal based on IS and/or OOS for RLM, whether to perform RLM measurement adjustment and/or BFD measurement adjustment comprises at least one of the following:
in a case that the terminal detects one or M1 ISs, switching to RLM and/or BFD measurement relaxation; or in a case that the terminal detects one or N1 OOSs, returning to normal RLM and/or BFD measurement;
in a case that the terminal detects one or N2 OOSs, switching to RLM and/or BFD measurement enhancement; or in a case that the terminal detects one or M2 ISs, returning to normal RLM and/or BFD measurement; and
in a case that the terminal detects one or N3 OOSs, switching to RLM and/or BFD measurement enhancement; or in a case that the terminal detects one or M3 ISs, switching to RLM and/or BFD measurement relaxation; wherein
M1, M2, M3, N1, N2, and N3 are integers greater than 1.

4. The method according to claim 2, wherein the determining, by the terminal based on an RLM related timer, whether to perform RLM measurement adjustment and/or BFD measurement adjustment comprises at least one of the following:
in a case that the terminal starts a first timer, switching to RLM and/or BFD measurement enhancement; or in a case that the terminal does not start or stops the first timer or starts a second timer, returning to normal RLM and/or BFD measurement;
in a case that the terminal does not start or stops a first timer or starts a second timer, switching to RLM and/or BFD measurement relaxation; or in a case that the terminal starts the first timer, returning to normal RLM and/or BFD measurement; and
in a case that the terminal starts a first timer, switching to RLM and/or BFD measurement enhancement; or in a case that the terminal does not start or stops the first timer or starts a second timer, switching to RLM and/or BFD measurement relaxation.

5. The method according to claim 2, wherein the determining, by the terminal based on a BFI of BFD, whether to perform RLM measurement adjustment and/or BFD measurement adjustment comprises at least one of the following:
in a case that the terminal detects one or N4 BFIs, switching to RLM and/or BFD measurement enhancement; or in a case that the terminal detects no BFI or detects no more than M4 BFIs within a preset time, returning to normal RLM and/or BFD measurement;
in a case that the terminal detects no BFI or detects no more than M5 BFIs within a preset time, switching to RLM and/or BFD measurement relaxation; or in a case that the terminal detects one or N5 BFIs, returning to normal RLM and/or BFD measurement; and
in a case that the terminal detects one or N6 BFIs, switching to RLM and/or BFD measurement enhancement; or in a case that the terminal detects no BFI or detects no more than M6 BFIs within a preset time, switching to RLM and/or BFD measurement relaxation; wherein
M4, M5, M6, N4, N5, and N6 are integers greater than 1.

6. The method according to claim 3 or 5, wherein the method satisfies at least one of the following:
the detection of M1, M2, or M3 ISs comprises one of the following: M1, M2, or M3 consecutive ISs being detected, M1, M2, or M3 ISs being detected within a preset time, and M1, M2, or M3 consecutive ISs being detected within a preset time;
the detection of N1, N2, or N3 OOS comprises one of the following: N1, N2, or N3 consecutive OOSs being detected, N1, N2, or N3 OOSs being detected within a preset time, and N1, N2, or N3 consecutive OOSs being detected within a preset time;
the detection of N4, N5, or N6 BFIs comprises one of the following: N4, N5, or N6 consecutive BFIs being detected, N4, N5, or N6 BFIs being detected within a preset time, and N4, N5, or N6 consecutive BFIs being detected within a preset time; and
the detection of no more than M4, M5, or M6 BFIs comprises one of the following: no more than M4, M5, or M6 consecutive BFIs being detected, no more than M4, M5, or M6 BFIs being detected within a preset time, and no more than M4, M5, or M6 consecutive BFIs being detected within a preset time.

7. The method according to claim 2, wherein the determining, by the terminal based on a BFD related timer, whether to perform RLM measurement adjustment and/or BFD measurement adjustment comprises at least one of the following:
in a case that the terminal starts a first timer, switching to RLM and/or BFD measurement enhancement; or in a case that the terminal does not start or stops the first timer or starts a second timer, returning to normal RLM and/or BFD measurement;
in a case that the terminal does not start or stops a first timer or starts a second timer, switching to RLM and/or BFD measurement relaxation; or in a case that the terminal starts the first timer, returning to normal RLM and/or BFD measurement; and
in a case that the terminal starts a first timer, switching to RLM and/or BFD measurement enhancement; or in a case that the terminal does not start or stops the first timer or starts a second timer, switching to RLM and/or BFD measurement relaxation.

8. The method according to claim 2, wherein the determining, by the terminal, whether to perform RLM measurement adjustment and/or BFD measurement adjustment based on a condition for RRM measurement relaxation and/or enhancement comprises at least one of the following:
in a case that the condition for RRM measurement relaxation is satisfied or the condition for RRM measurement enhancement is not satisfied, switching to RLM and/or BFD measurement relaxation; or in a case that the condition for RRM measurement relaxation is not satisfied, returning to normal RLM and/or BFD measurement;
in a case that the condition for RRM measurement enhancement is satisfied or the condition for RRM measurement relaxation is not satisfied, switching to RLM and/or BFD measurement enhancement; or in a case that the condition for RRM measurement enhancement is not satisfied, returning to normal RLM and/or BFD measurement; and
in a case that the condition for RRM measurement relaxation is satisfied or the condition for RRM measurement enhancement is not satisfied, switching to RLM and/or BFD measurement relaxation; or in a case that the condition for RRM measurement enhancement is satisfied or the condition for RRM measurement relaxation is not satisfied, switching to RLM and/or BFD measurement enhancement.

9. The method according to claim 2, wherein the determining, by the terminal based on whether an S-measure criteria is satisfied or whether intra-frequency neighboring cell/inter-frequency neighboring cell measurement is started, whether to perform RLM measurement adjustment and/or BFD measurement adjustment comprises at least one of the following:
in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, returning to normal RLM and/or BFD measurement;
in a case that the S-measure criteria is not satisfied or the intra-frequency neighboring cell/inter-frequency neighboring cell measurement is started, switching to RLM and/or BFD measurement enhancement; or in a case that the S-measure criteria is satisfied or the intra-frequency neighboring cell/inter-frequency neighboring cell measurement is not started, returning to normal RLM and/or BFD measurement; and
in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, switching to RLM and/or BFD measurement enhancement.

10. The method according to claim 2, wherein the determining, by the terminal based on whether an indication of the network-side device has been received, whether to perform RLM measurement adjustment and/or BFD measurement adjustment comprises at least one of the following:
in a case that the terminal has received first indication information transmitted by the network-side device, switching to RLM and/or BFD measurement relaxation; or in a case that the terminal has received no first indication information transmitted by the network-side device, returning to normal RLM and/or BFD measurement;
in a case that the terminal has received no first indication information transmitted by the network-side device, switching to RLM and/or BFD measurement enhancement; or in a case that the terminal has received first indication information transmitted by the network-side device, returning to normal RLM and/or BFD measurement; and
in a case that the terminal has received first indication information transmitted by the network-side device, switching to RLM and/or BFD measurement relaxation; or in a case that the terminal has received no first indication information transmitted by the network-side device, switching to RLM and/or BFD measurement enhancement.

11. The method according to claim 10, wherein the first indication information comprises at least one of the following:
a radio resource control RRC message, a medium access control control element MAC CE, or downlink control information DCI for indicating that the terminal is to perform RLM and/or BFD measurement relaxation;
an RRC message, a MAC CE, or a DCI activation command for activating a time domain synchronous TDS state; and
a transmission configuration indicator TCI state addition or release command.

12. The method according to claim 2, wherein the preset condition comprises a first condition and/or a second condition, and the determining, by a terminal based on a preset condition, whether to perform RLM measurement adjustment and/or BFD measurement adjustment comprises at least one of the following:
in a case that the first condition is satisfied, switching to RLM and/or BFD measurement relaxation; or in a case that the second condition is satisfied, returning to normal RLM and/or BFD measurement;
in a case that the second condition is satisfied, switching to RLM and/or BFD measurement enhancement; or in a case that the first condition is satisfied, returning to normal RLM and/or BFD measurement; and
in a case that the first condition is satisfied, switching to RLM and/or BFD measurement relaxation; or in a case that the second condition is satisfied, switching to RLM and/or BFD measurement enhancement; wherein
the first condition comprises at least one of the following: a moving speed of the terminal being lower than a threshold, being located in cell center, having power saving requirements, being in a power saving mode, remaining power being lower than a threshold, and a DRX period being greater than a threshold; and
the second condition comprises at least one of the following: a moving speed of the terminal being greater than a threshold, being located at cell edge, having no power saving requirements, not being in a power saving mode, remaining power being greater than a threshold, and a DRX period being less than a threshold.

13. The method according to claim 12, wherein the moving speed of the terminal is determined based on at least one of the following: an absolute moving speed related indicator of the terminal, the number of cells/beams which the terminal camps on or moves to within a preset time, and an amount of variation of target measurement.

14. The method according to claim 2, wherein the determining, by the terminal based on a condition for RLM measurement relaxation and/or enhancement, whether to perform BFD measurement adjustment comprises at least one of the following:
in a case that the condition for RLM measurement relaxation is satisfied or the condition for RLM measurement enhancement is not satisfied, switching to BFD measurement relaxation; or in a case that the condition for RLM measurement relaxation is not satisfied, returning to normal BFD measurement;
in a case that the condition for RLM measurement enhancement is satisfied or the condition for RLM measurement relaxation is not satisfied, switching to BFD measurement enhancement; or in a case that the condition for RLM measurement enhancement is not satisfied, returning to normal BFD measurement; and
in a case that the condition for RLM measurement relaxation is satisfied or the condition for RLM measurement enhancement is not satisfied, switching to BFD measurement relaxation; or in a case that the condition for RLM measurement enhancement is satisfied or the condition for RLM measurement relaxation is not satisfied, switching to BFD measurement enhancement.

15. The method according to claim 2, wherein the determining, by the terminal based on a condition for BFD measurement relaxation and/or enhancement, whether to perform RLM measurement adjustment comprises at least one of the following:
in a case that the condition for BFD measurement relaxation is satisfied or the condition for BFD measurement enhancement is not satisfied, switching to RLM measurement relaxation; or in a case that the condition for BFD measurement relaxation is not satisfied, returning to RLM normal measurement;
in a case that the condition for BFD measurement enhancement is satisfied or the condition for BFD measurement relaxation is not satisfied, switching to RLM measurement enhancement; or in a case that the condition for BFD measurement enhancement is not satisfied, returning to RLM normal measurement; and
in a case that the condition for BFD measurement relaxation is satisfied or the condition for BFD measurement enhancement is not satisfied, switching to RLM measurement relaxation; or in a case that the condition for BFD measurement enhancement is satisfied or the condition for BFD measurement relaxation is not satisfied, switching to RLM measurement enhancement.

16. The method according to claim 1, wherein before the determining, by a terminal according to a preset rule, whether to perform RLM measurement adjustment and/or BFD measurement adjustment, the method further comprises:
receiving, by the terminal, configuration information from a network-side device, wherein the configuration information is used for configuring a measurement adjustment related parameter.

17. The method according to claim 16, wherein
the measurement adjustment related parameter indicates that the network-side device supports RLM measurement adjustment and/or BFD measurement adjustment.

18. The method according to claim 16, wherein the measurement adjustment related parameter comprises at least one of the following:
a value of a related timer after measurement adjustment and/or a maximum value of a counter;
a threshold of a timer for determining start or stop of measurement adjustment, and/or a threshold of a counter, or a preset time length, or the preset number of periods;
a measurement configuration after measurement adjustment; and
permission for RLM and/or BFD measurement adjustment by the terminal.

19. The method according to claim 1, wherein before the determining, by a terminal according to a preset rule, whether to perform RLM measurement adjustment and/or BFD measurement adjustment, the method further comprises:
receiving, by the terminal, second indication information, wherein the second indication information is used to indicate a measurement adjustment related parameter and indicate that the terminal is to perform RLM measurement adjustment and/or BFD measurement adjustment.

20. The method according to claim 19, wherein
the second indication information is comprised in a system information block SIB message and/or an advance indication message; wherein
the advance indication message comprises at least one of the following: a go-to-sleep GTS signal, a wake-up signal WUS, and downlink control information DCI.

21. The method according to claim 20, wherein the second indication information is comprised in a SIB message, and the second indication information is used to indicate at least one of the following:
whether a serving cell supports RLM measurement adjustment and/or BFD measurement adjustment;
an RLM measurement adjustment related parameter for the serving cell;
a BFD measurement adjustment related parameter for the serving cell;
a type of the serving cell; and
permission for measurement adjustment of the terminal in the serving cell.

22. The method according to claim 1, wherein the method further comprises:
transmitting, by the terminal, request information to a network-side device, wherein the request information comprises at least one of the following: an RLM measurement adjustment option and/or BFD measurement adjustment option expected by the terminal, and an RLM measurement adjustment related parameter and/or BFD measurement adjustment related parameter expected by the terminal; and
the measurement adjustment option comprises at least one of the following: measurement relaxation, measurement enhancement, and normal measurement.

23. The method according to claim 1, wherein configuration related to the preset rule is configured for one of the following:
per terminal, per cell/cell group, per frequency domain/carrier/bandwidth/bandwidth part, per terminal per frequency domain/carrier/bandwidth/bandwidth part, and per beam.

24. A terminal, comprising:
a measurement adjustment module, configured to determine, according to a preset rule, whether to perform radio link monitoring RLM measurement adjustment and/or beam failure detection BFD measurement adjustment, wherein the measurement adjustment comprises at least one of the following: measurement relaxation, measurement enhancement, or normal measurement.

25. The terminal according to claim 24, wherein the measurement adjustment module is configured to perform at least one of the following:
determining, based on in-sync IS and/or out-of-sync OOS for RLM, whether to perform RLM measurement adjustment and/or BFD measurement adjustment;
determining, based on an RLM related timer, whether to perform RLM measurement adjustment and/or BFD measurement adjustment;
determining, based on a beam failure instance BFI of BFD, whether to perform RLM measurement adjustment and/or BFD measurement adjustment;
determining, based on a BFD related timer, whether to perform RLM measurement adjustment and/or BFD measurement adjustment;
determining, based on a condition for radio resource management RLM measurement relaxation and/or enhancement, whether to perform RLM measurement adjustment and/or BFD measurement adjustment;
determining, based on whether an S-measure criteria is satisfied or whether intra-frequency neighboring cell/inter-frequency neighboring cell measurement is started, whether to perform RLM measurement adjustment and/or BFD measurement adjustment;
determining, based on whether indication of a network-side device is received, whether to perform RLM measurement adjustment and/or BFD measurement adjustment;
determining, based on a preset condition, whether to perform RLM measurement adjustment and/or BFD measurement adjustment;
determining, based on a condition for RLM measurement relaxation and/or enhancement, whether to perform BFD measurement adjustment; and
determining, based on a condition for BFD measurement relaxation and/or enhancement, whether to perform RLM measurement adjustment.

26. The terminal according to claim 25, wherein the measurement adjustment module is configured to perform at least one of the following:
in a case that the terminal detects one or M1 ISs, switching to RLM and/or BFD measurement relaxation; or in a case that the terminal detects one or N1 OOSs, returning to normal RLM and/or BFD measurement;
in a case that the terminal detects one or N2 OOSs, switching to RLM and/or BFD measurement enhancement; or in a case that the terminal detects one or M2 ISs, returning to normal RLM and/or BFD measurement; and
in a case that the terminal detects one or N3 OOSs, switching to RLM and/or BFD measurement enhancement; or in a case that the terminal detects one or M3 ISs, switching to RLM and/or BFD measurement relaxation; wherein
M1, M2, M3, N1, N2, and N3 are integers greater than 1.

27. The terminal according to claim 25, wherein the measurement adjustment module is configured to perform at least one of the following:
in a case that the terminal starts a first timer, switching to RLM and/or BFD measurement enhancement; or in a case that the terminal does not start or stops the first timer or starts a second timer, returning to normal RLM and/or BFD measurement;
in a case that the terminal does not start or stops a first timer or starts a second timer, switching to RLM and/or BFD measurement relaxation; or in a case that the terminal starts the first timer, returning to normal RLM and/or BFD measurement; and
in a case that the terminal starts a first timer, switching to RLM and/or BFD measurement enhancement; or in a case that the terminal does not start or stops the first timer or starts a second timer, switching to RLM and/or BFD measurement relaxation.

28. The terminal according to claim 25, wherein the measurement adjustment module is configured to perform at least one of the following:
in a case that the terminal detects one or N4 BFIs, switching to RLM and/or BFD measurement enhancement; or in a case that the terminal detects no BFI or detects no more than M4 BFIs within a preset time, returning to normal RLM and/or BFD measurement;
in a case that the terminal detects no BFI or detects no more than M5 BFIs within a preset time, switching to RLM and/or BFD measurement relaxation; or in a case that the terminal detects one or N5 BFIs, returning to normal RLM and/or BFD measurement; and
in a case that the terminal detects one or N6 BFIs, switching to RLM and/or BFD measurement enhancement; or in a case that the terminal detects no BFI or detects no more than M6 BFIs within a preset time, switching to RLM and/or BFD measurement relaxation; wherein
M4, M5, M6, N4, N5, and N6 are integers greater than 1.

29. The terminal according to claim 25, wherein the measurement adjustment module is configured to perform at least one of the following:
in a case that the terminal starts a first timer, switching to RLM and/or BFD measurement enhancement; or in a case that the terminal does not start or stops the first timer or starts a second timer, returning to normal RLM and/or BFD measurement;
in a case that the terminal does not start or stops a first timer or starts a second timer, switching to RLM and/or BFD measurement relaxation; or in a case that the terminal starts the first timer, returning to normal RLM and/or BFD measurement; and
in a case that the terminal starts a first timer, switching to RLM and/or BFD measurement enhancement; or in a case that the terminal does not start or stops the first timer or starts a second timer, switching to RLM and/or BFD measurement relaxation.

30. The terminal according to claim 25, wherein the measurement adjustment module is configured to perform at least one of the following:
in a case that the condition for RRM measurement relaxation is satisfied or the condition for RRM measurement enhancement is not satisfied, switching to RLM and/or BFD measurement relaxation; or in a case that the condition for RRM measurement relaxation is not satisfied, returning to normal RLM and/or BFD measurement;
in a case that the condition for RRM measurement enhancement is satisfied or the condition for RRM measurement relaxation is not satisfied, switching to RLM and/or BFD measurement enhancement; or in a case that the condition for RRM measurement enhancement is not satisfied, returning to normal RLM and/or BFD measurement; and
in a case that the condition for RRM measurement relaxation is satisfied or the condition for RRM measurement enhancement is not satisfied, switching to RLM and/or BFD measurement relaxation; or in a case that the condition for RRM measurement enhancement is satisfied or the condition for RRM measurement relaxation is not satisfied, switching to RLM and/or BFD measurement enhancement.

31. The terminal according to claim 25, wherein the measurement adjustment module is configured to perform at least one of the following:
in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, returning to normal RLM and/or BFD measurement;
in a case that the S-measure criteria is not satisfied or the intra-frequency neighboring cell/inter-frequency neighboring cell measurement is started, switching to RLM and/or BFD measurement enhancement; or in a case that the S-measure criteria is satisfied or the intra-frequency neighboring cell/inter-frequency neighboring cell measurement is not started, returning to normal RLM and/or BFD measurement; and
in a case that the S-measure criteria is satisfied or the intra-frequency neighboring cell/inter-frequency neighboring cell measurement is not started, switching to RLM and/or BFD measurement relaxation; or in a case that the S-measure criteria is not satisfied or the intra-frequency neighboring cell/inter-frequency neighboring cell measurement is started, switching to RLM and/or BFD measurement enhancement.

32. The terminal according to claim 25, wherein the measurement adjustment module is configured to perform at least one of the following:
in a case that the terminal has received first indication information transmitted by the network-side device, switching to RLM and/or BFD measurement relaxation; or in a case that the terminal has received no first indication information transmitted by the network-side device, returning to normal RLM and/or BFD measurement;
in a case that the terminal has received no first indication information transmitted by the network-side device, switching to RLM and/or BFD measurement enhancement; or in a case that the terminal has received first indication information transmitted by the network-side device, returning to normal RLM and/or BFD measurement; and
in a case that the terminal has received first indication information transmitted by the network-side device, switching to RLM and/or BFD measurement relaxation; or in a case that the terminal has received no first indication information transmitted by the network-side device, switching to RLM and/or BFD measurement enhancement.

33. The terminal according to claim 25, wherein the preset condition comprises a first condition and/or a second condition, and the measurement adjustment module is configured to perform at least one of the following:
in a case that the first condition is satisfied, switching to RLM and/or BFD measurement relaxation; or in a case that the second condition is satisfied, returning to normal RLM and/or BFD measurement;
in a case that the second condition is satisfied, switching to RLM and/or BFD measurement enhancement; or in a case that the first condition is satisfied, returning to normal RLM and/or BFD measurement; and
in a case that the first condition is satisfied, switching to RLM and/or BFD measurement relaxation; or in a case that the second condition is satisfied, switching to RLM and/or BFD measurement enhancement; wherein
the first condition comprises at least one of the following: a moving speed of the terminal being lower than a threshold, being located in cell center, having power saving requirements, being in a power saving mode, remaining power being lower than a threshold, and a DRX period being greater than a threshold; and
the second condition comprises at least one of the following: a moving speed of the terminal being greater than a threshold, being located at cell edge, having no power saving requirements, not being in a power saving mode, remaining power being greater than a threshold, and a DRX period being less than a threshold.

34. The terminal according to claim 25, wherein the measurement adjustment module is configured to perform at least one of the following:
in a case that the condition for RLM measurement relaxation is satisfied or the condition for RLM measurement enhancement is not satisfied, switching to BFD measurement relaxation; or in a case that the condition for RLM measurement relaxation is not satisfied, returning to normal BFD measurement;
in a case that the condition for RLM measurement enhancement is satisfied or the condition for RLM measurement relaxation is not satisfied, switching to BFD measurement enhancement; or in a case that the condition for RLM measurement enhancement is not satisfied, returning to normal BFD measurement; and
in a case that the condition for RLM measurement relaxation is satisfied or the condition for RLM measurement enhancement is not satisfied, switching to BFD measurement relaxation; or in a case that the condition for RLM measurement enhancement is satisfied or the condition for RLM measurement relaxation is not satisfied, switching to BFD measurement enhancement.

35. The terminal according to claim 25, wherein the measurement adjustment module is configured to perform at least one of the following:
in a case that the condition for BFD measurement relaxation is satisfied or the condition for BFD measurement enhancement is not satisfied, switching to RLM measurement relaxation; or in a case that the condition for BFD measurement relaxation is not satisfied, returning to RLM normal measurement;
in a case that the condition for BFD measurement enhancement is satisfied or the condition for BFD measurement relaxation is not satisfied, switching to RLM measurement enhancement; or in a case that the condition for BFD measurement enhancement is not satisfied, returning to RLM normal measurement; and
in a case that the condition for BFD measurement relaxation is satisfied or the condition for BFD measurement enhancement is not satisfied, switching to RLM measurement relaxation; or in a case that the condition for BFD measurement enhancement is satisfied or the condition for BFD measurement relaxation is not satisfied, switching to RLM measurement enhancement.

36. The terminal according to claim 24, further comprising:
a receiving module, configured to receive configuration information from a network-side device, wherein the configuration information is used for configuring a measurement adjustment related parameter.

37. The terminal according to claim 36, wherein the measurement adjustment related parameter comprises at least one of the following:
a value of a related timer after measurement adjustment and/or a maximum value of a counter;
a threshold of a timer for determining start or stop of measurement adjustment, and/or a threshold of a counter, or a preset time length, or the preset number of periods;
a measurement configuration after measurement adjustment; and
permission for RLM and/or BFD measurement adjustment by the terminal.

38. The terminal according to claim 24, further comprising:
a receiving module, configured to receive second indication information, wherein the second indication information is used to indicate a measurement adjustment related parameter and indicate that the terminal is to perform RLM measurement adjustment and/or BFD measurement adjustment.

39. A terminal, comprising a processor, a memory, and a program or instructions stored in the memory and capable of running on the processor, wherein when the program or instructions are executed by the processor, the measurement adjustment method according to any one of claims 1 to 23 is implemented.

40. A readable storage medium, wherein the readable storage medium stores a program or instructions, and when the program or instructions are executed by the processor, the measurement adjustment method according to any one of claims 1 to 23 is implemented.

41. A chip, wherein the chip comprises a processor and a communication interface, wherein the communication interface is coupled to the processor, and the processor is configured to run a program or instructions to implement the measurement adjustment method according to any one of claims 1 to 23.

42. A computer program product, wherein the computer program product is stored in a non-volatile memory, and the computer program product is executed by at least one processor to implement the measurement adjustment method according to any one of claims 1 to 23.
